# EUROPEAN PATENT APPLICATION

(11) **EP 2 933 357 A1**
(43) Date of publication of application: **21.10.2015**
(21) Application number: 14164564.8
(22) Date of filing: 14.04.2014
(51) Int. Cl.: C25B 15/00, H01M 8/04, H01M 8/12

(54) **Enhancing SOEC system lifetime by controlling inlet gas composition**

(71) Applicant: Haldor Topsøe A/S, 2800 Kgs. Lyngby (DK)
(72) Inventor: FRIIS PEDERSEN, Claus, DK-2720 Vanløse (DK); BECH, Lone, 4100 Ringsted (DK); DRAGSBÆK DUHN, Jakob, 2800 Kgs. Lyngby (DK); JAKOBSSON, Niklas Bengt, 26023 Kågeröd (SE)
(74) Representative: Haldor Topsøe A/S

(57) **Abstract**

In a method for enhancing the lifetime of a solid oxide electrolysis cell system by counteracting nitridation of the threads of the in-line electrical heaters of the system, the start-up, shut-down and trip operations are done in a humidified nitrogen atmosphere on the fuel side to achieve a dew point between -70°C and 23°C, and in air or in carbon dioxide on the oxygen side, securing that sufficiently oxidizing conditions are always present across the whole surface of the cells on the oxygen side in the stack.

## Description

The present invention relates to a method for enhancing the lifetime of a solid oxide electrolysis cell (SOEC) system by controlling the composition of the inlet gas being fed to the system.

An electrolysis cell uses electricity to split e.g. water molecules (H₂O) into hydrogen (H₂) and oxygen (O₂). In this way, electrical energy is transformed into chemically bound energy in the hydrogen molecules. This is the reverse of the process that occurs in a fuel cell.

A solid oxide electrolysis cell is basically the corresponding fuel cell (solid oxide fuel cell or SOFC) run in reverse. Such a cell operates at relatively high temperatures (700-1000°C), which makes the efficiency very high. The two electrolysis products, hydrogen and oxygen, are formed on each side of the cell. SOECs may be used for the production of hydrogen from surplus electricity generated by e.g. wind turbines. The hydrogen can be stored and, by means of a fuel cell, reconverted into electricity again when the demand arises. This allows the storage of electricity when production exceeds demand.

An SOEC can also electrolyze carbon dioxide (CO₂) to carbon monoxide (CO). If water is electrolyzed at the same time, a mixture of hydrogen and CO is produced. This mixture, also called syngas, is the starting point of a large number of syntheses of hydrocarbons in the chemical industry. In this way, liquid transport fuels can be produced synthetically. If the electricity is generated by wind turbines or solar cells, then the use of the fuel is CO₂ neutral.

It is constantly an important issue to improve the efficiency and the lifetime of solid oxide cells. For example, US 2012/0003552 describes a method for improving the efficiency and durability of electrical energy storage using solid oxide electrolysis cells. More specifically, a set of reversible SOEC operating conditions is disclosed, whereby higher conversion efficiencies can be achieved. Further, US 2012/0251912 discloses a system design that incorporates an electrochemical device for energy storage. Said device can be a reversible SOEC that can operate in both discharge mode, i.e. power generation, and charge mode, i.e. electrolytic fuel production.

The SOEC system underlying the present invention comprises an SOEC stack, where the inlet gas on the fuel side as well as on the oxygen side must be pre-heated by means of a heating unit, so as to supply heat to the SOEC. This can for example be done using in-line electric heaters, e.g. with threads of Kanthal-type (Fe-Cr-Al alloy) in direct contact with the gas. The hot effluent gas from the SOEC stack is led to feed/effluent heat exchangers on the product side and the oxygen side, respectively.

In normal operation mode, oxygen is produced on the oxygen side and carbon monoxide is produced on the product side. This means that there are reducing conditions on the fuel side and oxidizing conditions on the oxygen side. During start-up, shut-down and trip, the standard procedure would be to use an inert gas, i.e. nitrogen. This leads to the following issues:

If Kanthal-type threads are used in the fuel side and oxygen side heaters, then these threads become subject to nitridation and mechanical degradation when only nitrogen and non-oxidizing inert gases are present. This is because a kinetic competition exists between oxidation and nitridation. If oxygen or an oxidizing agent is present in the gas, then an oxide layer forming reaction is dominating. If, on the other hand, only nitrogen is present, then nitridation will occur.

The electrode on the oxygen side of the SOEC, e.g. Sr-doped LaMnO₃ (LSM), can be damaged or delaminate from the electrolyte, e.g. yttria-stabilised zirconia (YSZ), if there is no oxygen present on this side during start-up, shut-down and trip of the cell. During normal electrolysis operation oxygen is produced.

In order to mitigate the above issues and thereby enhancing the lifetime of the SOEC system, the present invention relates to a method for enhancing the lifetime of a solid oxide electrolysis cell system by counteracting nitridation of the threads of the in-line electrical heaters of the system, wherein start-up, shut-down and trip operations are done:
- in a humidified nitrogen atmosphere on the fuel side to achieve a dew point between -70°C and 23°C, and
- in air on the oxygen side or
- in carbon dioxide on the oxygen side,
and wherein sufficiently oxidizing conditions are always ensured across the whole surface of the cells on the oxygen side in the stack.

In the above method for enhancing the lifetime of a solid oxide electrolysis cell system by counteracting nitridation of the threads of the in-line electrical heaters of the system and the oxygen side of the cells, the normal operation is done with an oxidizing atmosphere on the oxygen side, said atmosphere consisting of carbon dioxide, air or mixtures thereof.

Regarding nitridation of the threads in the heater on the fuel side of the SOEC system, start-up, shut-down and trip can be conducted in the presence of nitrogen, but it has turned out that the nitrogen should be humidified to achieve a dew point above -70°C and below 23°C. This can for example be done by bubbling a side-stream of the nitrogen flow through water. This humidified nitrogen accomplishes a slightly oxidizing atmosphere which is sufficient to avoid any nitridation of the threads of the in-line electrical heaters.

In this case, adding water instead of another oxidant, such as CO₂, has the benefit that if a voltage is applied to the SOEC with this feed gas, then no poisonous gas will be produced. This is not so if CO₂ is used, because then poisonous CO will be produced, which is not desirable in shut-down and trip situations.

For hydrogen, the critical safety issue is to avoid concentrations above 3% where explosions can occur in air. This corresponds to avoiding dew points above 23°C. With a dew point of e.g. -50°C, the resulting hydrogen concentration will be only 0.005%.

Operation with low power consumption is critical for some applications, such as hot stand-by and battery-based shut-down in case of power failure. In this situation it is essential to operate with a split flow that can be adjusted so that the overall dew point for the gas entering the heater on the fuel side is -70°C or above.

As regards nitridation of the threads in the heater on the oxygen side, start-up and shut-down can be conducted in the presence of air. Regarding the oxygen side of the SOEC, start-up, shut-down and trip can also be conducted in the presence of air. During normal operation it may be necessary to operate with a recycle on the oxygen side to ensure that there are always sufficiently oxidizing conditions present across the total surface of the cells in the stack.

## Claims

1. A method for enhancing the lifetime of a solid oxide electrolysis cell system by counteracting nitridation of the threads of the in-line electrical heaters of the system, wherein start-up, shut-down and trip operations are done:
- in a humidified nitrogen atmosphere on the fuel side to achieve a dew point between -70°C and 23°C, and
- in air on the oxygen side or
- in carbon dioxide on the oxygen side,
and wherein sufficiently oxidizing conditions are always present across the whole surface of the cells on the oxygen side in the stack.

2. A method according to claim 1 for enhancing the lifetime of a solid oxide electrolysis cell system by counteracting nitridation of the threads of the in-line electrical heaters of the system and the oxygen side of the cells, wherein normal operation is done with an oxidizing atmosphere on the oxygen side, said atmosphere consisting of carbon dioxide, air or mixtures thereof.

3. The method according to claim 1 or 2, wherein the system is operated with a recycle on the oxygen side to ensure that sufficiently oxidizing conditions are always present across the whole surface of the cells in the stack.

4. The method according to any of the claims 1-3, wherein the system comprises a split flow, which during operation can be adjusted, so that the overall dew point of the gas entering the heater on the fuel side is -70°C or above.

5. The method according to any of the claims 1-4, wherein the humidified nitrogen atmosphere is achieved by bubbling a side-stream of the nitrogen flow through water.
